# EUROPEAN PATENT APPLICATION

(11) **EP 4 209 564 A1**
(43) Date of publication of application: **12.07.2023**
(21) Application number: 23152805.0
(22) Date of filing: 09.02.2021
(51) Int. Cl.: C09J 197/00

(54) **BINDER COMPOSITION**

(30) Priority: 12.02.2020 FI 20205145
(62) Divisional of application: 21156035.4
(71) Applicant: UPM-Kymmene Corporation, 00100 Helsinki (FI)
(72) Inventor: Pietarinen, Suvi, 53100 Lappeenranta (FI); Pykäläinen, Nina, 53300 Lappeenranta (FI)
(74) Representative: Papula Oy

(57) **Abstract**

A method for producing a binder composition is disclosed. The method may comprise: i) providing a raw material of crushed lignin agglomerates, wherein at least 90 weight-% of the crushed lignin agglomerates have a particle size of at most 10 mm; ii) dissolving the provided raw material into an aqueous solvent composition, wherein at least 95 weight-% of the total amount of the raw material provided into the aqueous solvent composition is dissolved into the aqueous solvent composition within at most 60 minutes; and iii) heating the composition formed in step ii) at a temperature of 60 - 150 °C in the presence of crosslinking agent and compound selected from the class of phenols for polymerizing the raw material, the crosslinking agent, and the compound selected from the class of phenols.

## Description

### TECHNICAL FIELD

The present disclosure relates to a method for producing a binder composition. The present disclosure further relates to a binder composition and to the use thereof.

### BACKGROUND

Lignin is a natural polymer, which can be extracted from e.g. wood. As lignin is a natural biopolymer its use as a component in glues instead of synthetic materials has been investigated in order to come up with a more environmentally friendly adhesive composition. Especially, the ability to replace synthetic phenol in phenolic resins, such as phenol formaldehyde resin, has been the object of researches. Lignin can be used for the purpose of decreasing the amount of synthetic phenol in a resin composition. Lignin has previously been used for replacing phenol during the production of lignin-phenol-formaldehyde resin.

The currently known lignin based resins are not, however, suitable for all the applications where traditional phenolic resins are being used. For example, the currently known lignin based resins are not suitable for high-pressure laminates. High-pressure laminates (HPL), which are also known as plastic laminates, can be produced by fusing together under the influence of heat and pressure, multiple layers of paper, fabrics, or other core materials by using thermosetting resins as binders. The inventors have recognized a need for a method, which would result in a higher phenol replacement in the resin and thus in a more environmentally friendly binder composition having suitable properties for use in different applications such as high-pressure laminates.

### SUMMARY

A method for producing a binder composition is disclosed. The method may comprise: i) providing a raw material of crushed lignin agglomerates, wherein at least 90 weight-% of the crushed lignin agglomerates have a particle size of at most 10 mm; ii) dissolving the provided raw material into an aqueous solvent composition, wherein at least 95 weight-% of the total amount of the raw material provided into the aqueous solvent composition is dissolved into the aqueous solvent composition within at most 60 minutes; and iii) heating the composition formed in step ii) at a temperature of 60 - 150 °C in the presence of crosslinking agent and compound selected from the class of phenols for polymerizing the raw material, the compound selected from the class of phenols, and the crosslinking agent.

Further is disclosed a binder composition that may be obtained by the method as disclosed in the present specification.

Further is disclosed the use of the binder composition that may be obtained by the method as disclosed in the present specification.

### BRIEF DESCRIPTION OF THE DRAWINGS

The accompanying drawing, which is included to provide a further understanding of the embodiments and constitute a part of this specification, illustrates various embodiments. In the drawings:
Fig. 1 presents the results from example 1;
Fig. 2 presents stereo microscope pictures from uncrushed lignin (Fig. 2a) and crushed lignin (Fig. 2b) as measured with Stereo microscope Wild M5A; and
Fig. 3 SEM pictures from uncrushed lignin (3a) and crushed lignin (3b) as measured with FE SEM Hitachi SU 5000 (SEM = scanning electron microscope).

### DETAILED DESCRIPTION

A method for producing a binder composition is disclosed. The method may comprise: i) providing a raw material of crushed lignin agglomerates, wherein at least 90 weight-% of the crushed lignin agglomerates have a particle size of at most 10 mm; ii) dissolving the provided raw material into an aqueous solvent composition, wherein at least 95 weight-% of the total amount of the raw material provided into the aqueous solvent composition is dissolved into the aqueous solvent composition within at most 60 minutes; and iii) heating the composition formed in step ii) at a temperature of 60 - 150 °C in the presence of crosslinking agent and compound selected from the class of phenols for polymerizing the raw material, the compound selected from the class of phenols, and the crosslinking agent.

Further is disclosed a binder composition obtainable by the method as defined in the present specification.

Further is disclosed the use of the binder composition obtainable by the method as defined in the present specification for the production of high pressure laminates, continuous pressure laminate, rock wool, insulation wool, oriented strand board, panel surface films, or plywood surface films.

The inventors surprisingly found out that when providing raw material of crushed lignin agglomerates, it is possible to have the used raw material to efficiently dissolve into an aqueous solvent composition. The inventors surprisingly found out that not only the particle size of the lignin raw material but also the crushing process itself affected the ability of the raw material to dissolve into the aqueous solvent composition. Without limiting to any specific theory about why the crushed lignin agglomerates may be dissolved more effectively than corresponding lignin that has not been subjected to crushing in any manner, it is to be considered that the crushing process may make the lignin raw material softer and thus have the molecules of the lignin agglomerates are more easily dissolved from the surface layer of the agglomerate. Hard lignin particles or agglomerates present may negatively affect the ability of the raw material to dissolve into the aqueous solvent composition, whereby hard stone like lignin agglomerates may remain present during the following cooking step negatively affecting the properties of the formed binder composition. Such hard lignin particles or agglomerates may have been formed e.g. during storage of the lignin in large storing bags or may have been formed during a previous process of separating and recovering lignin. Hard stone like agglomerates present in the raw material may remain as inert filler during the cooking or polymerization step. Crushing the raw material provides lignin agglomerates of suitable size but also decreases the size of possible impurities, such as fibrous particles, whereby their possible negative effect on the production of the binder composition may be reduced. Further, in applications, such as production of oriented strand board, comprising spraying of the binder composition, un-dissolved hard particles may clog the nozzles used.

In the context of this specification, the term "lignin agglomerate" may refer to at least two lignin particles being attached to each other. A lignin particle may be considered to be formed of one lignin polymer. Lignin can be considered as an irregular, randomly cross-linked polymer of phenylpropane units joined by different linkages.

The surface of the crushed lignin agglomerates is coarser than the surface of lignin agglomerates that have not been subjected to a crushing process.

The crushed lignin agglomerates may have a particle size of at most 9 mm, or at most 8 mm, or at most 7 mm, or at most 6 mm, or at most 5 mm, or at most 4 mm. The crushed lignin agglomerates may have a particle size of at least 0.15 mm, or at least 0.5 mm, or at least 1 mm. The particle size of the lignin agglomerates used can be determined e.g. by sieving the lignin agglomerates.

In one embodiment, at least 95 weight-%, or at least 99 weight-%, or at least 99.5 weight-% of the crushed lignin agglomerates have a particle size of at most 10 mm. In one embodiment, at least 90 weight-%, or at least 95 weight-%, or at least 99 weight-% of the crushed lignin agglomerates have a particle size of at most 9 mm, or at most 8 mm, or at most 7 mm, or at most 6 mm, or at most 5 mm, or at most 4 mm.

The inventors surprisingly noted that controlling the particle size of the lignin agglomerates has the added utility of beneficially affecting the solubility of the lignin raw material. It was noted that the particle size may affect the solubility of the lignin raw material as molecules are being more easily dissolved from the surface layer of the lignin particles or agglomerates. The specific surface area increases as the particle size is decreased, thereby enabling faster formation of a dispersion and the following reactions during the cooking or polymerization step.

Step i) of providing the raw material of crushed lignin agglomerates may comprise subjecting lignin to a process to produce crushed lignin agglomerates. The process may be selected from a group consisting of crushing, grinding, rubbing, pulverizing, stripping, and a combination of any of these.

The lignin to be subjected to the process to produce crushed lignin agglomerates may have a dry matter content of at least 50 %, or at least 65 %.

In one embodiment, step i) of providing the raw material of crushed lignin agglomerates comprises subjecting lignin to a process selected from a group consisting of crushing, grinding, rubbing, pulverizing, stripping, and a combination of any of these.

In one embodiment, step i) of providing the raw material of crushed lignin agglomerates comprises subjecting lignin to one or more of the following: crushing, grinding, rubbing, pulverizing, or stripping. In one embodiment, step i) of providing the raw material of crushed lignin agglomerates comprises subjecting lignin to at least two of the following: crushing, grinding, rubbing, pulverizing, stripping, drying, screening, or sieving.

In one embodiment, step i) of providing the raw material of crushed lignin agglomerates comprises subjecting lignin to sieving and/or screening during and/or after the process selected from a group consisting of crushing, grinding, rubbing, pulverizing, stripping, and a combination of any of these.

The grinding can be coarse grinding. The crushing can be coarse crushing.

In one embodiment, step i) of providing the raw material of crushed lignin agglomerates does not comprise solely sieving and/or screening of lignin.

Processing lignin with at least one of the above process alternatives has the added utility that the raw material will become activated and softened such that hard stone like particles or agglomerates may not be present or at least their amount is reduced as compared to the situation before subjecting the lignin to these processing steps. Crushing lignin may result in the lignin agglomerates being broke up and the surface of the particles becoming softer whereby the raw material of crushed lignin agglomerates may dissolve easier into the aqueous solvent composition. The raw material of crushed lignin agglomerates will become more coarser and may thus dissolve more quickly compared to lignin that has not been subjected to the above processing steps.

In the context of this specification, the term "lignin" may refer to lignin originating from any suitable lignin source. In one embodiment, the lignin is essentially pure lignin. By the expression "essentially pure lignin" should be understood as at least 70 % pure lignin, or at least 90 % pure lignin, or at least 95 % pure lignin, or at least 98 % pure lignin. The essentially pure lignin may comprise at most 30 %, or at most 10 %, or at most 5 %, or at most 2 %, of other components and/or impurities. Extractives and carbohydrates such as hemicelluloses can be mentioned as examples of such other components.

The lignin may contain less than 30 weight-%, or less than 10 weight-%, or less than 5 weight-%, or less than 2 weight-% of carbohydrates. The amount of carbohydrates present in lignin can be measured by high performance anion exchange chromatography with pulsed amperometric detector (HPAE-PAD) in accordance with standard SCAN-CM 71.

The ash percentage of lignin may be less than 7.5 weight-%, or less than 5 weight-%, or less than 3 weight-%, or less than 1 weight-%. The ash content can be determined by carbonifying and quickly burning a lignin sample so that alkali salts are not melted before the organic matter has been burned (e.g. 20 - 200 °C for 30 minutes, after which temperature is adjusted to 200 - 600 °C for 1 h, and thereafter adjusting the temperature to 600 - 700 °C for 1 hour), and finally the lignin sample is ignited at 700 °C for 1 h. Ash content of a lignin sample refers to the mass that remains of the sample after burning and ignition, and it is presented as per cent of the sample's dry content. In one embodiment, the lignin is technical lignin. In the context of this specification, the term "technical lignin" may refer to lignin that is derived from lignin in any biomass by any technical process. In one embodiment, technical lignin is lignin received from an industrial process.

In one embodiment, the lignin is selected from a group consisting of kraft lignin, steam explosion lignin, biorefinery lignin, supercritical separation lignin, hydrolysis lignin, flash precipitated lignin, biomass originating lignin, lignin from alkaline pulping process, lignin from soda process, lignin from organosolv pulping, lignin from alkali process, lignin from enzymatic hydrolysis process, and any combination thereof. In one embodiment, the lignin is wood based lignin. The lignin can originate from softwood, hardwood, annual plants or from any combination thereof.

By "kraft lignin" is to be understood in this specification, unless otherwise stated, lignin that originates from kraft black liquor. Black liquor is an alkaline aqueous solution of lignin residues, hemicellulose, and inorganic chemicals used in a kraft pulping process. The black liquor from the pulping process comprises components originating from different softwood and hardwood species in various proportions. Lignin can be separated from the black liquor by different, techniques including e.g. precipitation and filtration. Lignin usually begins precipitating at pH values below 11 - 12. Different pH values can be used in order to precipitate lignin fractions with different properties. These lignin fractions differ from each other by molecular weight distribution, e.g. Mw and Mn, polydispersity, hemicellulose and extractive contents. The molar mass of lignin precipitated at a higher pH value is higher than the molar mass of lignin precipitated at a lower pH value. Further, the molecular weight distribution of lignin fraction precipitated at a lower pH value is wider than of lignin fraction precipitated at a higher pH value. The precipitated lignin can be purified from inorganic impurities, hemicellulose and wood extractives using acidic washing steps. Further purification can be achieved by filtration.

The term "flash precipitated lignin" should be understood in this specification as lignin that has been precipitated from black liquor in a continuous process by decreasing the pH of a black liquor flow, under the influence of an over pressure of 200 - 1000 kPa, down to the precipitation level of lignin using a carbon dioxide based acidifying agent, preferably carbon dioxide, and by suddenly releasing the pressure for precipitating lignin. The method for producing flash precipitated lignin is disclosed in patent application FI 20106073. The residence time in the above method is under 300 s. The flash precipitated lignin particles, having a particle diameter of less than 2 pm, form agglomerates, which can be separated from black liquor using e.g. filtration. The advantage of the flash precipitated lignin is its higher reactivity compared to normal kraft lignin. The flash precipitated lignin can be purified and/or activated if needed for the further processing.

The lignin may be derived from an alkali process. The alkali process can begin with liquidizing biomass with strong alkali followed by a neutralization process. After the alkali treatment, the lignin can be precipitated in a similar manner as presented above.

The lignin may be derived from steam explosion. Steam explosion is a pulping and extraction technique that can be applied to wood and other fibrous organic material.

By "biorefinery lignin" is to be understood in this specification, unless otherwise stated, lignin that can be recovered from a refining facility or process where biomass is converted into fuel, chemicals and other materials.

By "supercritical separation lignin" is to be understood in this specification, unless otherwise stated, lignin that can be recovered from biomass using supercritical fluid separation or extraction technique. Supercritical conditions correspond to the temperature and pressure above the critical point for a given substance. In supercritical conditions, distinct liquid and gas phases do not exist. Supercritical water or liquid extraction is a method of decomposing and converting biomass into cellulosic sugar by employing water or liquid under supercritical conditions. The water or liquid, acting as a solvent, extracts sugars from cellulose plant matter and lignin remains as a solid particle.

The lignin may be derived from a hydrolysis process. The lignin derived from the hydrolysis process can be recovered from paper-pulp or wood-chemical processes.

The lignin may originate from an organosolv process. Organosolv is a pulping technique that uses an organic solvent to solubilize lignin and hemicellulose.

The lignin may be lignin from an enzymatic hydrolysis process. Enzymatic hydrolysis is a process, wherein enzymes assist in cleaving bonds in molecules with the addition of elements of water. In one embodiment, the enzymatic hydrolysis comprises enzymatic hydrolysis of cellulose.

In one embodiment, the aqueous solvent composition comprises or consists of a compound selected from the class of phenols and/or alkali. The aqueous solvent composition may be an aqueous solvent composition of alkali; an aqueous solvent composition of a compound selected from the class of phenols; or an aqueous solvent composition of a compound selected from the class of phenols and alkali.

The compound selected from the class of phenols may be selected from a group consisting of phenol, cresol, resorcinol, and any combinations thereof. In one embodiment, the compound selected from the class of phenols is phenol.

The concentration of the compound selected from the class of phenols in step ii) may be 10 - 60 weight-%, or 20 - 50 weight, or 30 - 45 weight-% based on the total weight of the composition in step ii).

The concentration of the raw material in step ii) may be 10 - 40 weight-%, or 20 - 30 weight-% based on the total weight of the composition in step ii).

In one embodiment, the alkali is a hydroxide of an alkali metal. In one embodiment, the alkali is sodium hydroxide, potassium hydroxide, or a combination thereof.

The concentration of alkali in step ii) may be 0.1 - 11 weight-%, or 0.3 - 9 weight-%, or 0,5 - 5 weight-%, or 1 - 2 weight-% based on the total weight of the composition in step ii).

The temperature of the composition can be kept, in step ii), at 15 - 95 °C, or at 18 - 80 °C, or at 20 - 70 °C, or at 25 - 60 °C, or at 30 - 50 °C, or at 35 - 40 °C.

In one embodiment, at least 95 weight-% of the total amount of the raw material provided into the aqueous solvent composition is dissolved into the aqueous solvent composition within at most 45 minutes, or at most 30 minutes, or at most 15 minutes.

In one embodiment, at least 97 weight-%, or at least 99 weight-% of the total amount of the raw material provided into the aqueous solvent composition is dissolved into the aqueous solvent composition within at most 60 minutes, or at most 45 minutes, or at most 30 minutes, or at most 15 minutes.

Being able to quickly dissolve the raw material of crushed lignin agglomerates into the aqueous solvent composition has the added utility of beneficially affecting the following step of allowing the polymerization of the lignin raw material, the compound selected from the class of phenols and the crosslinking agent by shortening the time needed for the heating step iii) while simultaneously providing the formed binder composition with uniform quality.

Having dissolved the provided raw material into the aqueous solvent composition, step iii) of heating the composition formed may be conducted in the presence of crosslinking agent and compound selected from the class of phenols.

The crosslinking agent may be selected from a group consisting of an aldehyde, a derivative of an aldehyde, an aldehyde forming compound, and any combinations of these. In one embodiment, the derivative of an aldehyde is hexamethylenetetramine, paraformaldehyde, or trioxane. In one embodiment, the crosslinking agent is selected from a group consisting of an aromatic aldehyde, glyoxal, furfuryl alcohol, caprolactam and glycol compounds. The aldehyde can be formaldehyde. The aromatic aldehyde can be furfuryl aldehyde. In one embodiment, the crosslinking agent is an aldehyde, and preferably formaldehyde, paraformaldehyde or a combination thereof.

The compound selected from the class of phenols may be selected from a group consisting of phenol, cresol, resorcinol, and any combinations thereof. In one embodiment, the compound selected from the class of phenols is phenol.

In one embodiment, the compound selected from the class of phenols is provided into the composition in step ii) as a part of the aqueous solvent composition and/or in step iii). The compound selected from the class of phenols may be added to the composition in step iii). However, if the aqueous solvent composition, into which the raw material is dissolved in step ii), comprises a compound selected from the class of phenols then it may not be needed to separately add the compound selected from the class of phenols in step iii). However, a further amount of the compound selected from the class of phenols may be added in step iii) even though the aqueous solvent composition comprises the compound selected from the class of phenols.

The heating in step iii) may be conducted in the presence of a catalyst. The catalyst may be an alkali. The catalyst may be a hydroxide of an alkali metal. The catalyst may be sodium hydroxide, potassium hydroxide, or a combination of these. The concentration of the catalyst may be 0.1 - 15 weight-%, or 0.5 - 12 weight-%, or 3 - 10 weight-%, or 5 - 8 weight based on the total weight of the composition in step iii). If the aqueous solvent composition, into which the raw material is dissolved in step ii), comprises alkali, then it may not be needed to separately add a catalyst in step iii). However, an amount of catalyst may be added in step iii) even though the aqueous solvent composition comprises alkali.

The total amount of the catalyst used in step iii) may be added essentially all at once. The total amount of the crosslinking agent used in the method and the total amount of the catalyst used in the method can be mixed with the composition formed in step ii) during step iii).

Step iii) may comprise heating the composition formed in step ii) at a temperature of 65 - 140 °C, or at a temperature of 70 - 100, or at a temperature of 75 - 95 °C, or at a temperature of 80 - 90 °C.

In one embodiment, the polymerization of the lignin raw material, the compound selected from the class of phenols, and the crosslinking agent in step iii) is completed in 0.5 - 6 hours, or in 1.0 - 5 hours, or in 2 - 4 hours, or in 1.5 - 3.0 hours.

Step iii) of heating can be continued until a binder composition having a weight average molecular weight of 500 - 6000 g/mol, or 1000 - 4000 g/mol, is formed.

The weight average molecular weight of the binder composition can be determined by using a high-performance size-exclusion chromatography. In one embodiment, the weight average molecular weight of the binder composition is determined by using a high-performance size-exclusion chromatography in the following manner: Two parallel measurements are carried out. 0.1 M NaOH is used as an eluent. Calibration is done using Na-polystyrene sulfonate standards having a molecular weight of 1100 - 73900 g/mol. For quality control, standard quality kraft lignin and PSS molecular weight standard are used. The columns used are PSS MCX precolumns, 1000 Å and 100 000 Å separation columns filled with sulfonated styrene-divinylbenzene copolymer matrix. Isocratic run program is used. The run time is 45 minutes. The injection volume is 50 µl. The flux is 0.5 ml per minute. The temperature is 25 °C. As a result of the chromatography, number average molecular weight (Mn), weight average molecular weight (Mw), peak molecular weight (Mp) and polydispersity index (PDI) values can be reported.

The step of heating the formed composition in step iii) may be carried out for polymerizing the reactant components, i.e. crushed lignin agglomerates, the compound selected from the class of phenols, and the crosslinking agent, such that the viscosity of the binder composition is increased. The heating can be continued until a predetermined viscosity value is formed. The predetermined viscosity value of the final binder composition may vary depending on the specific application where the binder composition is to be used.

In one embodiment, step iii) of heating is continued until a binder composition having a viscosity value of 30 - 300 cP, or 40 - 200 cP, or 50 - 150 cP, or 80 - 120 cP. The viscosity is measured in step iii) at a temperature of 25 °C using a rotary viscometer (Digital Brookfield viscometer LVDV-II+ Pro; cone spindle).

In one embodiment, step iii) of heating is carried out as a one-step reaction. In one embodiment, step (iii) of heating is carried out in at least two steps. The temperature in the at least two steps may be the same or may be different.

The components and their precise amounts used for producing the binder composition may vary and the choice of the different components and their amounts is within the knowledge of the skilled person based on this specification. The temperature and any other values can be controlled and adjusted if needed during the production process.

The binder composition described in the current specification has the added utility of having properties suitable for the production of high pressure laminates, continuous pressure laminate, rock wool, insulation wool, oriented strand board, panel surface films, or plywood surface films. The method as described in the current specification has the added utility of providing a raw material that can be efficiently and quickly dissolved into an aqueous solvent composition. Being able to efficiently dissolve the raw material has the added utility of the raw material thus being activated and in reactive form for the following cooking step whereby a uniform and proper binder composition can be achieved.

### EXAMPLES

Reference will now be made in detail to various embodiments.

The description below discloses some embodiments in such a detail that a person skilled in the art is able to utilize the embodiments based on the disclosure. Not all steps or features of the embodiments are discussed in detail, as many of the steps or features will be obvious for the person skilled in the art based on this specification.

### Example 1 - Dissolving lignin samples into an aqueous composition of phenol

In this example the effect of providing crushed lignin agglomerates compared to non-crushed lignin was determined based on the below dissolution test. An aqueous composition of phenol was used as the aqueous solvent composition.

For all the tests 1000 g of an aqueous composition of phenol was firstly added into a reactor and heated to a temperature of 50 °C. Thereafter the lignin raw material was added to the reactor and was allowed to dissolve into the aqueous composition of phenol while mixing the same. The following testing procedure was simultaneously conducted:
1) Mix for 15 minutes => sieve though 400 µm sieve to see possible undissolved particles + take photo. Then put all back to the reactor;
2) Continue mixing for additional 15 minutes (Σ 30 min) => sieve though 400 µm sieve to see possible undissolved particles + take photo. Then put all back to the reactor;
3) Continue mixing for additional 15 minutes (Σ 45 min) => sieve though 400 µm sieve to see possible undissolved particles + take photo. Then put all back to the reactor;
4) Continue mixing for additional 15 minutes (Σ 60 min) => sieve though 400 µm sieve to see possible undissolved particles + take photo. Stop the tests after 60 minutes.

The following samples were tested:
Sample 1: Non-crushed lignin
Sample 2: Non-crushed lignin sieved by vibrating sieve
Sample 3: Lignin crushed with jaw breaker (Laitex Oy, type RML 220)
Sample 4: Lignin crushed with lump breaker (Telschig GmbH, CEMBREAK KB-330-ED/S-6-P)
Sample 5: Lignin crushed with Atrex (Megatrex Oy, Atrex G-series type CD500 G 45-P)

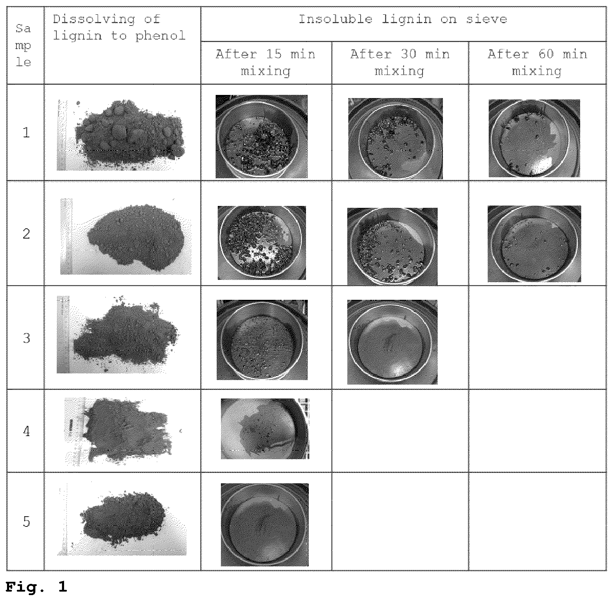

The results from the tests are presented in Fig. 1. As can be seen from the attached results, crushed lignin agglomerates efficiently dissolve into the aqueous composition of phenol compared to non-crushed lignin agglomerates and to lignin agglomerates that have only been subjected to sieving.

Sample number 4 was further analyzed by subjecting the sample to sieving before and after the process of producing crushed lignin agglomerates. A total amount of 3 kg of the sample was subjected to sieving with a Retsch shaking sieve by using sieves of the following sizes: 16 mm, 10 mm, 5 mm, 2 mm, and 1 mm. The sieving time was 15 minutes at the amplitude of 60. The results from the sieving are presented in below Table 1.

**Table 1.**

| Sieve size | Crushed lignin | Uncrushed lignin |
|---|---|---|
| > 16 mm | 0.0 % | 0.1 % |
| > 10 mm | 0.0 % | 0.2 % |
| > 5 mm | 0.1 % | 5.8 % |
| > 2 mm | 28.5 % | 26.3 % |
| > 1 mm | 30.9 % | 20.4 % |
| < 1 mm | 40.4 % | 47.2 % |

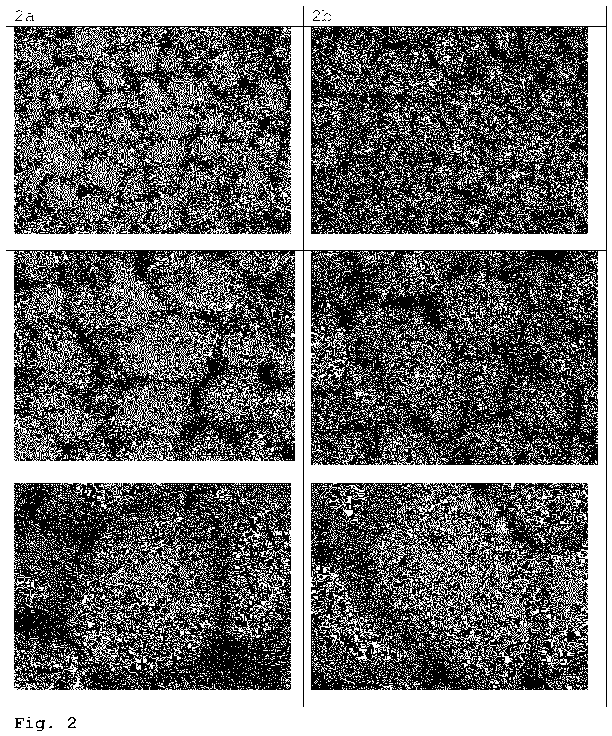

Further, the samples of Table 1 were subjected to stereo microscope imagining as measured with Stereo microscope Wild M5A. The results are presented in Fig 2a (uncrushed) and Fig. 2b (crushed). As can be seen from Fig. 2, surface of the crushed sample, i.e. the surfaces of the lignin agglomerates have been affected by the crushing process. It was noted that as the surfaces of the lignin agglomerates were affected by the crushing process, the dissolution into the aqueous solvent composition was also beneficially affected.

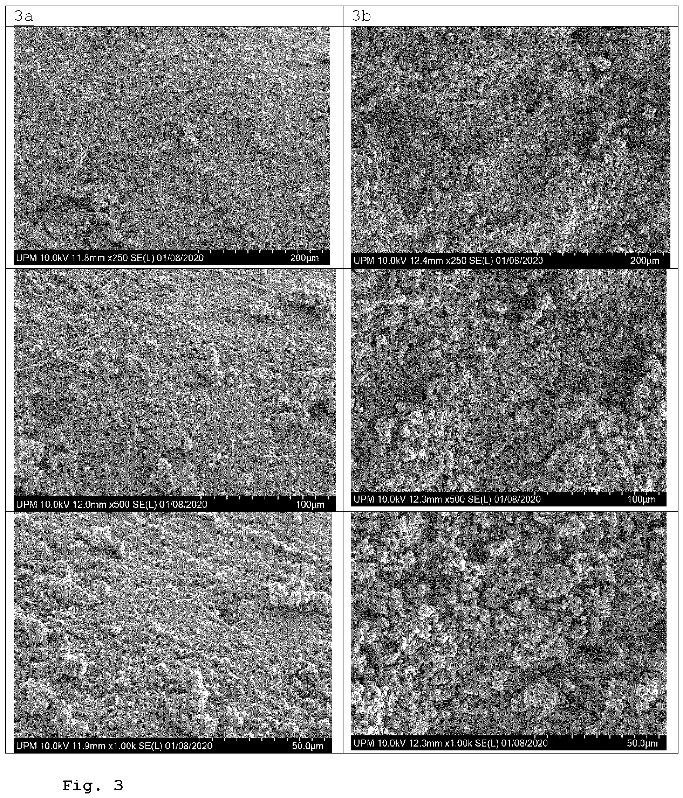

Further, the samples of Table 1 were subjected to SEM (scanning electron microscope) picturing as measured with FE SEM Hitachi SU 5000. The results are presented in Fig. 3a (uncrushed) and Fig. 3b (crushed). From Fig. 3a and Fig. 3b it can be seen that the surface of the crushed lignin agglomerates is more porous than the surface of uncrushed lignin agglomerates. As can be seen from Fig. 3a, the surfaces of the uncrushed lignin agglomerates clearly contain smooth and dense spots. As the surface of the lignin agglomerates become more porous as a result of the crushing process, chemicals may easier penetrate into the lignin agglomerate and thus assist in the lignin agglomerate being able to dissolve faster into the aqueous solvent composition. During the imagining, it was further noted that when the electron beam hit the surface of the crushed lignin agglomerate, distinct lignin particles were loosened. This kind of phenomenon was not noticed when subjecting the electron beam on the uncrushed lignin agglomerates.

Further, producing binder compositions from using the above samples, showed that the use of crushed lignin agglomerates beneficially affected the following binder composition production, e.g. by providing the produced binder compositions with uniform quality compared to binder compositions produced by using uncrushed lignin raw material.

It is obvious to a person skilled in the art that with the advancement of technology, the basic idea may be implemented in various ways. The embodiments are thus not limited to the examples described above; instead they may vary within the scope of the claims.

The embodiments described hereinbefore may be used in any combination with each other. Several of the embodiments may be combined together to form a further embodiment. A method, a composition, or a use, disclosed herein, may comprise at least one of the embodiments described hereinbefore. It will be understood that the benefits and advantages described above may relate to one embodiment or may relate to several embodiments. The embodiments are not limited to those that solve any or all of the stated problems or those that have any or all of the stated benefits and advantages. It will further be understood that reference to 'an' item refers to one or more of those items. The term "comprising" is used in this specification to mean including the feature(s) or act(s) followed thereafter, without excluding the presence of one or more additional features or acts.

## Claims

1. A method for producing a binder composition, wherein the method comprises:
i) providing a raw material of crushed lignin agglomerates, wherein at least 90 weight-% of the crushed lignin agglomerates have a particle size of at most 10 mm;
ii) dissolving the provided raw material into an aqueous solvent composition, wherein at least 95 weight-% of the total amount of the raw material provided into the aqueous solvent composition is dissolved into the aqueous solvent composition within at most 60 minutes; and
iii) heating the composition formed in step ii) at a temperature of 60 - 150 °C in the presence of crosslinking agent and compound selected from the class of phenols for polymerizing the raw material, the crosslinking agent, and the compound selected from the class of phenols.

2. The method of claim 1, wherein at least 95 weight-%, or at least 99 weight-%, or at least 99.5 weight-% of the crushed lignin agglomerates have a particle size of at most 10 mm.

3. The method of any one of the preceding claims, wherein at least 90 weight-%, or at least 95 weight-%, or at least 99 weight-% of the crushed lignin agglomerates have a particle size of at most 9 mm, or at most 8 mm, or at most 7 mm, or at most 6 mm, or at most 5 mm, or at most 4 mm.

4. The method of any of the preceding claims, wherein the aqueous solvent composition comprises or consists of a compound selected from the class of phenols and/or alkali.

5. The method of any one of the preceding claims, wherein the compound selected from the class of phenols is provided into the composition in step ii) as a part of the aqueous solvent composition and/or in step iii).

6. The method of any one of the preceding claims, wherein step i) of providing the raw material of crushed lignin agglomerates comprises subjecting lignin to a process selected from a group consisting of crushing, grinding, rubbing, pulverizing, stripping, and a combination of any of these.

7. The method of any one of the preceding claims, wherein at least 95 weight-% of the total amount of the raw material provided into the aqueous solvent composition is dissolved into the aqueous solvent composition within at most 45 minutes, or at most 30 minutes, or at most 15 minutes.

8. The method of any one of the preceding claims, wherein at least 97 weight-%, or at least 99 weight-% of the total amount of the raw material provided into the aqueous solvent composition is dissolved into the aqueous solvent composition within at most 60 minutes, or at most 45 minutes, or at most 30 minutes, or at most 15 minutes.

9. The method of claim 4, wherein the concentration of the compound selected from the class of phenols in step ii) is 10 - 60 weight-%, or 20 - 50 weight, or 30 - 45 weight-% based on the total weight of the composition in step ii).

10. The method of any one of the preceding claims, wherein the polymerization of the raw material, the compound selected from the class of phenols, and the crosslinking agent in step iii) is completed in 0.5 - 6 hours, or in 1.0 - 5 hours, or in 2 - 4 hours, or in 1.5 - 3.0 hours.

11. The method of any one of the preceding claims, wherein step iii) of heating is continued until a binder composition having a weight average molecular weight of 500 - 6000 g/mol, or 1000 - 4000 g/mol, is formed.

12. The method of any one of the preceding claims, wherein step iii) of heating is continued until a binder composition having a viscosity value of 30 - 300 cP, or 40 - 200 cP, or 50 - 150 cP, or 80 - 120 cP, is formed.

13. A binder composition obtainable by the method as defined in any one of claims 1 - 12.

14. Use of the binder composition obtainable by the method of any one of claims 1 - 12 for the production of high pressure laminates, continuous pressure laminate, rock wool, insulation wool, oriented strand board, panel surface films, or plywood surface films.
